# EUROPEAN PATENT APPLICATION

(11) **EP 2 299 389 A2**
(43) Date of publication of application: **23.03.2011**
(21) Application number: 10176324.1
(22) Date of filing: 13.09.2010
(51) Int. Cl.: G06K 15/10, H04N 1/58

(54) **Printing apparatus and printing method**

(30) Priority: 16.09.2009 JP 2009214901
(71) Applicant: Seiko Epson Corporation, Shinjuku-ku Tokyo (JP)
(72) Inventor: Koase, Takashi, Nagano 392-8502 (JP)
(74) Representative: Kastel, Stefan

(57) **Abstract**

A printing apparatus includes: a head unit that ejects ink; and a control unit that causes the head unit to eject ink. In the case where a first image and a second image that is adjacent to the first image are formed, the control unit forms a third image by causing ink to be ejected, in pixels within the second image at the boundary area between the first image and the second image, at an ejection amount that is greater than the amount of ink per unit pixel ejected in order to form the second image.

## Description

### BACKGROUND

### 1. Technical Field

The present invention relates to printing apparatuses and printing methods.

### 2. Related Art

Ink jet printers that carry out printing by ejecting a liquid from nozzles are known. Such printers have had a problem in that at the edge areas of formed images, ink that cannot be completely absorbed into the medium bleeds into regions in which the image is not formed, making it difficult to obtain a high-quality printed image.

Extracting the edge areas of an image and decimating the pixels located one colum's width of pixels inside of those edge areas have been proposed as a method for preventing this type of ink bleed (for example, see JP-A-2002-103596).

The method disclosed in JP-A-2002-103596 is capable of preventing ink from bleeding from regions in which an image is formed into regions in which the image is not formed. However, rather than only a single image being printed, complex images, in which multiple images are combined, are often printed in actual printing processes. JP-A-2002-103596 does not disclose a technique for preventing ink from bleeding from one image into another image at the boundary area between the two images when multiple images are formed adjacent to each other in this manner.

### SUMMARY

An advantage of some aspects of the invention is to prevent degradation in image quality caused by ink bleeding from one image into another image at a boundary area between two types of images printed by an ink jet printer.

An aspect of the invention is a printing apparatus including a head unit that ejects ink and a control unit that causes the head unit to eject ink, where in the case where a first image and a second image that is adjacent to the first image are formed, the control unit forms a third image by causing ink to be ejected, in pixels within the second image at the boundary area between the first image and the second image, at an ejection amount that is greater than the amount of ink per unit pixel ejected in order to form the second image.

Other features of the invention will be made clear by the descriptions in this specification and the appended drawings.

### BRIEF DESCRIPTION OF THE DRAWINGS

The invention will be described with reference to the accompanying drawings, wherein like numbers reference like elements.

Fig. 1 is a block diagram illustrating the overall configuration of a printing system.

Fig. 2A is a diagram illustrating the configuration of a printer according to an embodiment.

Fig. 2B is a side view illustrating the configuration of a printer according to the embodiment.

Fig. 3 is a cross-sectional view illustrating the structure of a head.

Fig. 4 is a diagram illustrating an example in which pixels in the vicinity of an edge of an image are enlarged.

Fig. 5A is a diagram illustrating ink dots formed upon a medium in the vicinity of an edge of an image.

Fig. 5B is a diagram illustrating ink dots formed upon a medium in the vicinity of a boundary area between two adjacent images.

Fig. 5C is a diagram illustrating a case where ink dots at a boundary area between two adjacent images have mixed together.

Fig. 6 is a diagram illustrating an example in which pixels in the vicinity of a boundary area between two adjacent images are enlarged.

Fig. 7A is a diagram illustrating an example in which ink has flowed between two images, the ink having flowed from an image formed using ink having a high brightness to an image formed using ink having a low brightness.

Fig. 7B is a diagram illustrating an example in which ink has flowed between two images, the ink having flowed from an image formed using ink having a low brightness to an image formed using ink having a high brightness.

Fig. 8 is a diagram illustrating a state of ink flow in the case where a third image is formed.

Fig. 9 is a diagram illustrating the influence of the color of which a third image is formed.

Fig. 10 is a diagram illustrating a state of ink flow in the case where a third image is formed and one column's width of pixels adjacent thereto are decimated.

Fig. 11A is a diagram illustrating a state in which one column's width of pixels are decimated at a boundary area between two adjacent images, the decimation occurring on the first image side.

Fig. 11B is a diagram illustrating a state in which one column's width of pixels are decimated at a boundary area between two adjacent images, the decimation occurring on the second image side.

Fig. 12 is a diagram illustrating a state of ink flow in the case where two adjacent images are in contact with each other at a single point.

Fig. 13 is a flowchart illustrating image edge processing according to an embodiment.

Fig. 14A is a diagram illustrating an example of a four-neighbor Laplacian filter.

Fig. 14B is a diagram illustrating an example of an eight-neighbor Laplacian filter.

Fig. 15 is a diagram illustrating an edge extraction process.

Fig. 16 is a diagram illustrating an edge expansion process.

Fig. 17 is a diagram illustrating an image differencing process.

Fig. 18 is a diagram illustrating a yellow component addition process.

Fig. 19 is a diagram illustrating image edge processing.

### DESCRIPTION OF EXEMPLARY EMBODIMENTS

The descriptions in this specification and the appended drawings will make clear at least the following points.

A printing apparatus including a head unit that ejects ink and a control unit that causes the head unit to eject ink, where in the case where a first image and a second image that is adjacent to the first image are formed, the control unit forms a third image by causing ink to be ejected, in pixels within the second image at the boundary area between the first image and the second image, at an ejection amount that is greater than the amount of ink per unit pixel ejected in order to form the second image.

According to this printing apparatus, degradation in an image caused by ink bleeding from one image to the other image can be prevented.

In the aforementioned printing apparatus, it is preferable for the third image to form a continuous region.

According to this printing apparatus, ink overflowing from the first image can be spread broadly out within the region of the third image, thus impeding the ink from reaching the second image.

In the aforementioned printing apparatus, it is preferable for the brightness of the ink of which the third image is formed to be greater than or equal to the brightness of the ink of which the second image is formed.

According to this printing apparatus, changes in the boundary (edge) areas of the images caused by the formation of the third image are less apparent.

In the aforementioned printing apparatus, it is preferable for the yellow component of pixels in the second image that are adjacent to the third image to be decimated.

According to this printing apparatus, in the case where the third image is formed using yellow ink, the third image and the second image no longer make contact with each other, and thus interrupting the flow path of the ink makes it possible to achieve even greater ink bleed prevention effects.

In the aforementioned printing apparatus, it is preferable for the control unit to separately cause ink to be ejected in the pixels of which the third image is formed after a halftone process has been performed on image data.

According to this printing apparatus, ink can be ejected in the pixels outside of the edge at 100% tone values by using any of halftoning method is used (dithering, error diffusion, and so on); this makes it possible to achieve the ink bleed prevention effects with more certainty.

In the aforementioned printing apparatus, it is preferable for the third image to be formed before the first image and the second image are formed.

According to this printing apparatus, the third image is formed before ink begins to flow from the first image to the second image, thus making it possible to prevent ink from flowing into the second image.

Furthermore, a printing method including forming a first image by causing ink to be ejected from a head unit; forming a second image that is different from the first image adjacent to the first image by causing ink to be ejected from the head unit; and forming a third image by causing ink to be ejected, in pixels within the second image at the boundary area between the first image and the second image, at an ejection amount that is greater than the amount of ink per unit pixel ejected in order to form the second image, will be made clear as well.

### Basic Configuration of Printing Apparatus

An ink jet printer (a printer 1) will be described hereinafter as an example of an embodiment of a printing apparatus for carrying out the invention.

### Printer Configuration

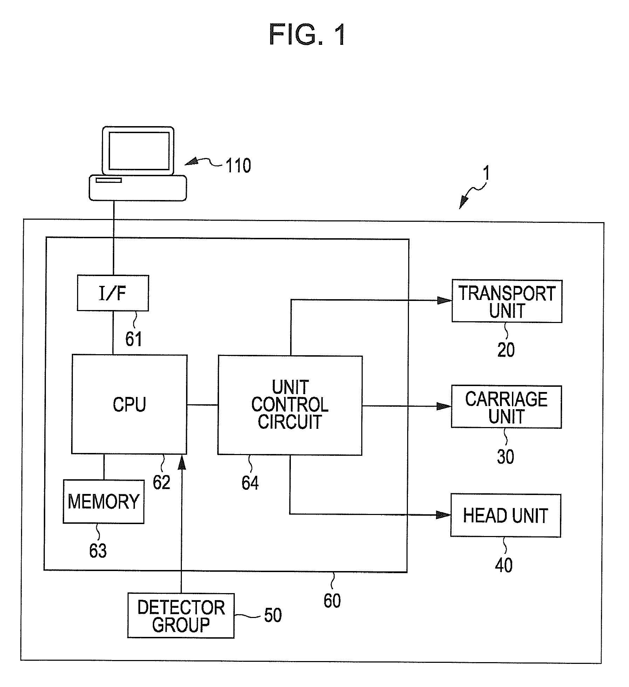

Fig. 1 is a block diagram illustrating the overall configuration of the printer 1.

The printer 1 is a liquid ejecting apparatus that records (prints) text, images, or the like onto a medium such as paper, cloth, film, or the like, and is connected to a computer 110, serving as an external device, so as to be capable of communication therewith.

A printer driver is installed in the computer 110. The printer driver is a program for displaying a user interface in a display device (not shown) and converting image data outputted by an application program into print data. This printer driver is stored on a storage medium (a computer-readable storage medium) such as a flexible disk (FD), a CD-ROM, or the like. The printer driver can also be downloaded to the computer 110 via the Internet. Note that this program is configured of code for realizing various functions.

The computer 110 outputs print data based on an image to be printed to the printer 1 in order to cause the printer 1 to print the image.

The printer 1 includes a transport unit 20, a carriage unit 30, a head unit 40, a detector group 50, and a controller 60. The controller 60 controls the various elements based on the print data received from the computer 110, which is an external device, thus printing the image onto a medium. The internal state of the printer 1 is monitored by the detector group 50, and the detector group 50 outputs detection results to the controller 60. The controller 60 controls the various elements based on the detection results outputted by the detector group 50. Transport Unit 20

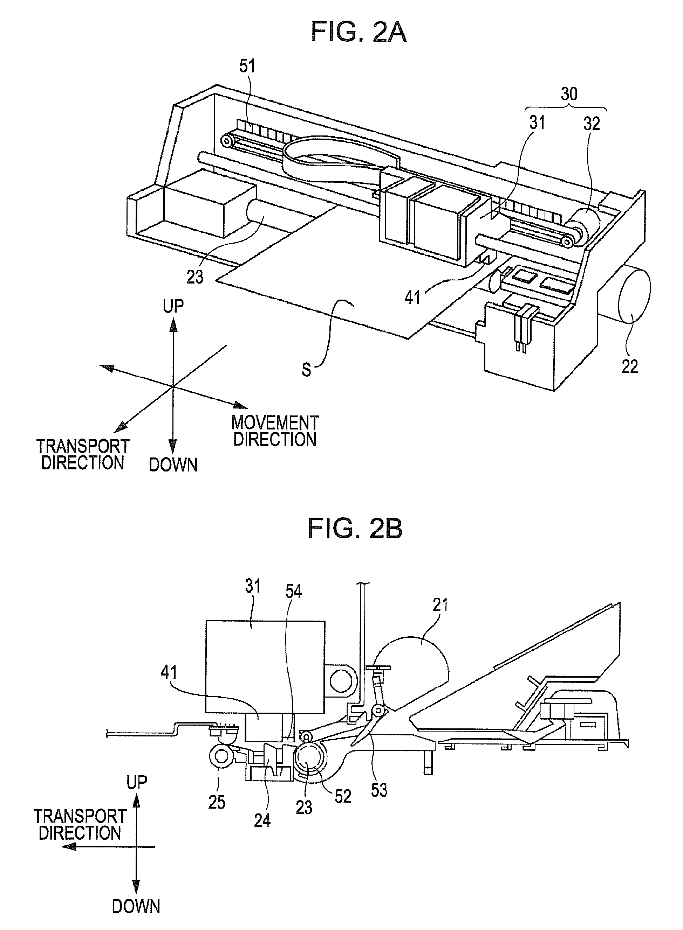

Figs. 2A and 2B are diagrams illustrating the configuration of the printer 1 according to this embodiment.

The transport unit 20 is an element for transporting the medium (for example, paper S or the like) in a predetermined direction (called the "transport direction" hereinafter). Here, the transport direction is the direction that is orthogonal to the movement direction of a carriage. The transport unit 20 includes a paper feed roller 21, a transport motor 22, a transport roller 23, a platen 24, and a paper discharge roller 25 (see Figs. 2A and 2B).

The paper feed roller 21 is a roller for feeding paper that is inserted into a paper insertion opening into the printer. The transport roller 23 is a roller that transports the paper S supplied by the paper feed roller 21 to a region where printing can be carried out, and is driven by the transport motor 22. The operation of the transport motor 22 is controlled by the controller 60 on the printer side. The platen 24 is a member that supports the paper S from its rear side while printing is being carried out on the paper S. The paper discharge roller 25 is a roller that discharges the paper S to the exterior of the printer, and is provided downstream, in the transport direction, from the region where printing can be carried out.

### Carriage Unit 30

The carriage unit 30 is an element for moving a carriage 31 attached to the head unit 40 in a predetermined direction (called the "movement direction" hereinafter; this operation is also referred to as "scanning"). The carriage unit 30 includes the carriage 31 and a carriage motor 32 (also called a CR motor) (see Figs. 2A and 2B).

The carriage 31 is capable of moving back and forth in the movement direction, and is driven by the carriage motor 32. The operation of the carriage motor 32 is controlled by the controller 60 on the printer side. The carriage 31 also holds a detachable ink cartridge that contains ink.

### Head Unit 40

The head unit 40 is an element for ejecting ink onto the paper S. The head unit 40 includes a head 41 that has multiple nozzles. The head 41 is provided in the carriage 31, and when the carriage 31 moves in the movement direction, the head 41 also moves in the movement direction. A dot line (raster line) is formed in the movement direction by the head 41 intermittently ejecting ink while moving in the movement direction.

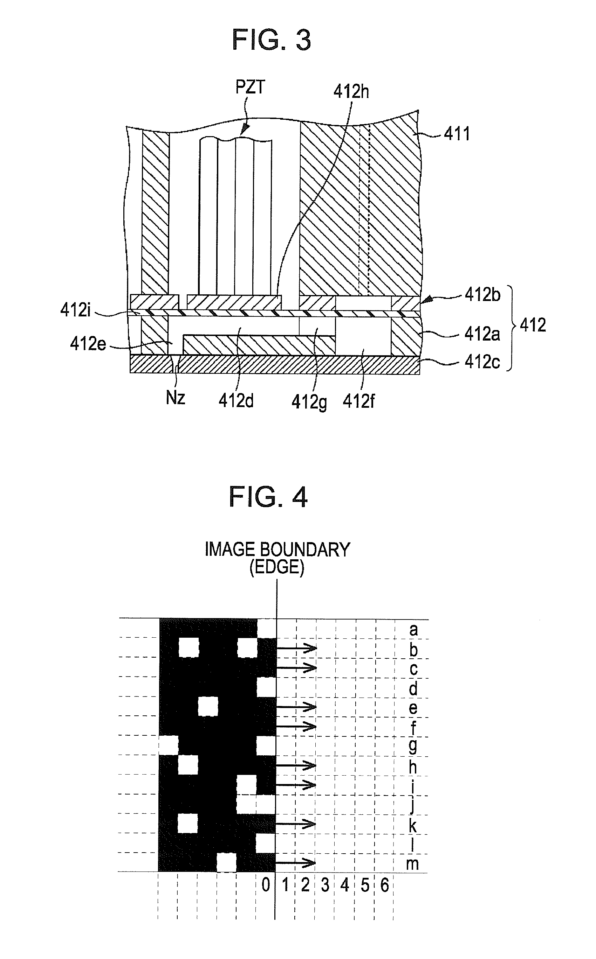

Fig. 3 is a cross-sectional view illustrating the structure of the head 41. The head 41 includes a case 411, a flow channel unit 412, and a piezo element group PZT. The case 411 houses the piezo element group PZT, and the flow channel unit 412 is affixed to the bottom surface of the case 411. The flow channel unit 412 includes a flow channel formation plate 412a, an elastic plate 412b, and a nozzle plate 412c. A groove portion that serves as a pressure chamber 412d, a penetrating opening that serves as a nozzle communication opening 412e, a penetrating opening that serves as a common ink chamber 412f, and a groove portion that serves as an ink supply channel 412g are formed in the flow channel formation plate 412a. The elastic plate 412b has an island portion 412h to which the tips of the piezo elements PZT are affixed. An elastic region is formed in the periphery of the island portion 412h by an elastic film 412i. The ink held in the ink cartridge is supplied to pressure chambers 412d corresponding to each of nozzles Nz via the common ink chamber 412f. The nozzle plate 412c is a plate in which the nozzles Nz are formed. A yellow nozzle row Y for ejecting yellow ink, a magenta nozzle row M for ejecting magenta ink, a cyan nozzle row C for ejecting cyan ink, and a black nozzle row K for ejecting black ink are formed in the nozzle surface. Each nozzle row is configured so that its nozzles Nz are arranged in the transport direction at a predetermined pitch D.

The piezo element group PZT includes multiple combtooth shaped piezo elements (driving elements), and includes the same amount of piezo elements as there are nozzles Nz.
A driving signal COM is applied to the piezo elements through a wiring board (not shown) in which a head control unit HC or the like is installed, and the piezo elements expand/contract in the vertical direction in accordance with the potential of the driving signal COM. When the piezo elements PZT expand/contract, the island portion 412h is pressed toward the pressure chamber 412d or is pulled in the direction opposite thereto. At this time, the elastic film 412i in the vicinity of the island portion 412h deforms, and ink droplets are expelled from the nozzles due to a rise/drop in the pressure within the pressure chamber 412d. Detector Group 50

The detector group 50 is an element for monitoring the state of the printer 1. The detector group 50 includes a linear encoder 51, a rotary encoder 52, a paper detection sensor 53, an optical sensor 54, and so on (see Figs. 2A and 2B).

The linear encoder 51 detects the position of the carriage 31 in the movement direction. The rotary encoder 52 detects the rotation amount of the transport roller 23. The paper detection sensor 53 detects the position of the leading edge of the paper S that is currently being fed.
The optical sensor 54 detects the presence/absence of the paper S at a position opposite thereto using a light-emitting unit and a light-receiving unit attached to the carriage 31, and can, for example, detect the width of the paper by detecting the positions of the edges of the paper while moving. In addition, the optical sensor 54 is, depending on the circumstances, capable of detecting the leading edge (the edge on the downstream side in the transport direction; also called the "top end") and the following edge (the edge on the upstream side in the transport direction; also called the "bottom end") of the paper S.

### Controller 60

The controller 60 is a control unit for controlling the printer. The controller 60 includes an interface unit 61, a CPU 62, a memory 63, and a unit control circuit 64.

The interface unit 61 serves to exchange data between the computer 110, which is an external device, and the printer 1. The CPU 62 is a computational processing device for carrying out overall control of the printer 1. The memory 63 is an element for securing a region for holding programs for the CPU 62, a work region, or the like, and is configured of a storage device such as a RAM, an EEPROM, or the like. The CPU 62 controls the various units, such as the transport unit 20 and so on, via the unit control circuit 64, in accordance with a program held in the memory 63.

### Printing Process Performed by Printer Driver

The printer driver receives image data from an application program, converts that image data into print data of a format that can be interpreted by the printer 1, and outputs the print data to the printer. When converting the image data from the application program into the print data, the printer driver carries out resolution conversion processing, color conversion processing, halftone processing, rasterizing processing, command addition processing, and so on. The various types of processing performed by the printer driver will be described hereinafter.

The resolution conversion processing is processing for converting the image data (text data, graphic data, or the like) outputted from the application program to a resolution used when printing onto a medium (a printing resolution). For example, in the case where a printing resolution of 720 x 720 dpi is specified, vector format image data received from the application program is converted into bitmap format image data with a resolution of 720 x 720 dpi.

Note that each piece of pixel data within the post-resolution conversion processing image data is RGB data of the various tones expressed by the RGB color space (for example, 256 tones). Here, the "pixel" is the unit of which images are composed, and an image is formed by arranging such pixels two-dimensionally. "Pixel data" is the print data at the level of the units of which images are composed, and refers to, for example, the tone values of dots formed upon the paper S.

The color conversion processing is processing that converts RGB data into data in the CMYK color space. Image data in the CMYK color space is data that corresponds to the colors of the ink in the printer. This color conversion processing is carried out based on a table (a color conversion lookup table, or LUT) in which RGB data tone values and CMYK data tone values are associated with each other.

Note that the post-color conversion processing pixel data is 8-bit CMYK data having 256 tones expressed using the CMYK color space. In this embodiment, image processing is carried out using this data, and ink bleed at the boundary area between two printed images is prevented. Details of the image processing will be given later.

The halftone processing is processing for converting data of a high number of tones into data having a number of tones that can be formed by the printer. For example, data expressing 256 tones is converted into 1-bit data expressing two tones, 2-bit data expressing four tones, and so on through this halftone processing. Dithering, γ correction, error diffusion, and so on are used in the halftone processing. The data that has undergone the halftone processing is of the same resolution as the printing resolution (for example, 720 x 720 dpi). The post-halftone processing image data corresponds to 1-bit or 2-bit pixel data for each pixel, and this pixel data is data expressing a dot formation state for its corresponding pixel (that is, the presence/absence of a dot and the size of the dot).

The rasterizing processing rearranges pixel data arranged in matrix form in a data order in which the pixel data is to be transferred to the printer 1, for each piece of pixel data. For example, this processing rearranges the pixel data based on the order in which nozzles are arranged in each nozzle row.

The command addition processing is processing that adds command data corresponding to the printing method to the data that undergoes the rasterizing processing. Transport data indicating a transport speed for the medium can be given as an example of command data.

The print data generated after these processes has been completed is then sent to the printer 1 by the printer driver.

### Printing Operations of Printer

Printing operations performed by the printer 1 will be briefly explained hereinafter. The controller 60 receives a printing instruction from the computer 110 via the interface unit 61, and carries out paper feed processing, dot formation processing, transport processing, and so on by controlling the various units.

The paper feed processing is processing in which paper onto which printing is to be performed is supplied to the printer and positioned at a printing start position (also called a "cueing position"). The controller 60 causes the paper feed roller 21 to rotate, thus feeding the paper onto which printing is to be performed to the transport roller 23. Next, the controller 60 causes the transport roller 23 to rotate, thus positioning the paper fed from the paper feed roller 21 at the printing start position.

The dot formation processing is processing in which ink is intermittently ejected from the head moving in the movement direction (scanning direction), thus forming dots upon the paper. The controller 60 causes the carriage 31 to move in the movement direction, and causes ink to be ejected from the head 41 based on the print data while the carriage 31 is moving. When the ejected ink droplets impact upon the paper, dots are formed upon the paper, and a dot line composed of multiple dots arranged in the movement direction is formed upon the paper.

The transport processing is processing that causes the paper to move relative to the head in the transport direction. The controller 60 causes the transport roller 23 to rotate, thus transporting the paper in the transport direction. As a result of this transport processing, the head 41 is capable of forming dots in positions that are different from the positions of the dots formed by the dot formation processing executed previously.

The controller 60 repeatedly alternates between the dot formation processing and the transport processing until there is no more data that is to be printed, thus gradually printing an image composed of dot lines on the paper. When there is no more data that is to be printed, the discharge roller is caused to rotate, thus discharging the paper. Note that the determination as to whether or not to discharge the paper may be based upon a discharge command included in the print data.

In the case where another page is to be printed thereafter, the same processing as described above is repeated, whereas in the case where no more printing is to be executed, the printing operations end.

### Ink Bleed

First, ink bleed will be described. Normally, ink bleed occurs when ink ejected from a head portion impacts upon a medium, forming droplets (ink dots), and the diameters of the impacted ink dots gradually expand as the ink permeates into the medium or evaporates into the air. However, in this embodiment, the influence of ink bleed is greater due to ink that is ejected onto the medium overflowing and flowing outward, rather than due to the diameters of the ink dots expanding. Accordingly, in this embodiment, detailed descriptions will not be given regarding the influence of permeation of ink into the medium, evaporation into the air, and so on.

### Bleed at the Edges of a Single Image

Ink bleed occurs at an edge of a printed image when ink at the edge of a printed image that was not completely absorbed into the medium overflows into a region of the medium in which the image is not formed. Fig. 4 is a diagram illustrating a state in which pixels in the vicinity of an edge of an image are enlarged. In Fig. 4, the boundary between the coordinates 0 and 1 in the horizontal direction is the edge of the image, and ink dots are formed in the region to the left of the edge line for the pixels that are filled with black; it can be assumed that the ink will pass through the edge line from the region to the left thereof, in which the image is printed, and flow into the region to the right of the edge line, in which no image is printed. Although in actuality, the ink is expected to disperse radially rather than flowing in a constant direction, for explanatory purposes, only a situation in which the ink flows in the direction perpendicular to the edge line will be discussed here.

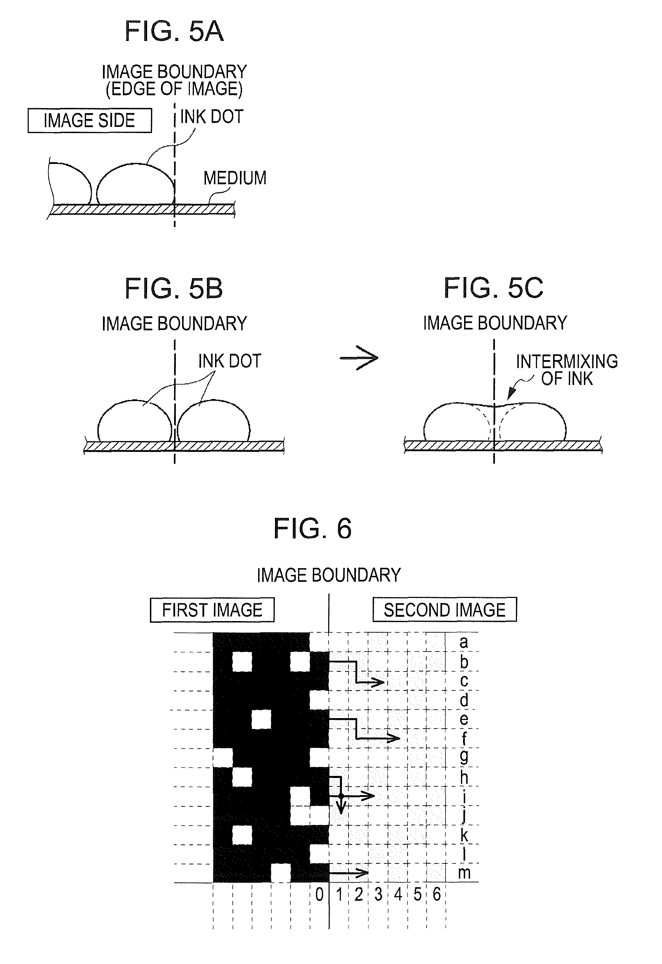

In actuality, because surface tension acts on the ink dots formed upon the medium, the ink holds a round shape and thus does not spread easily, as shown in Fig. 5A. Accordingly, it can be said that at the edge of a single image, it is comparatively unlikely for ink to bleed from the region in which the image is formed into a region in which an image is not formed.

### Bleed at the Edges of Two Images

However, the situation changes drastically when two images are formed adjacent to each other, as shown in Fig. 5B. In such a case, when ink dots are not completely absorbed into the medium at the boundary area between two images (that is, the edges of the respective images) and overflow, the ink dots of the adjacent images make contact with each other and, as shown in Fig. 5C, mix together to form a single mass. In other words, when inks come into contact with each other, those inks mix together using each other as the intermediary, resulting in the inks passing through the boundary area between the two images and spreading in such a manner.

Ink flow then occurs moving from the image whose ink ejection amount per unit pixel is greater (a first image, in this case) to the image whose ink ejection amount per unit pixel is lesser (a second image, in this case). Ink bleed from the first image to the second image thus occurs at the boundary area between the two images as a result.

If in Fig. 4 the first image is formed in the region to the left of the image borderline and the second image is formed in the region to the right of the image borderline, it is assumed that ink will flow (bleed) a distance of two pixels into the second image from each of the pixels in the first image that are adjacent to the boundary area. For example, it is assumed that ink will flow from a pixel (0,b) a distance of two pixels, to a pixel (2,b), in the case of Fig. 4, and likewise, that ink will flow from a pixel (0,e) a distance of two pixels, to a pixel (2,e). In Fig. 4, there are eight pixels in the first image that are adjacent to the borderline and in which ink dots are formed, or pixels (0,b), (0,c), (0,e), (0,f), (0,h), (0,i), (0,k), and (0,m), and thus it is assumed that the ink amount of the pixels, namely a total of 2 x 8 pixels or 16 pixels, will flow (bleed).

However, ink dots are not necessarily formed uniformly upon the medium, and thus there are cases where pixels in which ink dots are formed are interspersed with pixels in which ink dots are not formed on the medium. Fig. 6 illustrates an example in which the pixels in the vicinity of the boundary area between two images formed adjacent to each other are enlarged, and illustrates a state when printing is actually carried out. As shown in Fig. 6, at the boundary area, pixels are present both in locations where the first image and the second image make contact with each other and in locations where the first image and the second image do not make contact with each other. For example, although in Fig. 6, the inks in a pixel (0,b) in the first image and a pixel (1,b) in the second image make contact with each other, no inter-ink contact occurs between a pixel (0,c) in the first image and a pixel (1,c) in the second image. As described earlier, the flow of ink between the two images occurs due to ink dots that are formed making contact with each other, and thus ink flows from the first image to the second image between pixels in which the inks make contact with each other, as is the case with the pixels (0,b) and (1,b). On the other hand, no ink flow occurs between pixels in which there is no inter-ink contact, as is the case with the pixels (0,c) and (1,c).

In Fig. 6, pixels in which ink dots are formed in both the first image and the second image at the boundary area therebetween, or in other words, pixels in which ink dots of both images make contact with each other at the boundary area, are present in five locations, or (0, b), (0,e), (0,h), (0,i), and (0,m). In this case, ink flow occurs in sixteen pixels because more ink flows from the respective pixels. For example, while ink does not flow from the pixel (0,c) in the first image to the pixel (1,c) in the second image, more ink flows from the pixel (0,b), which is adjacent to the pixel (0,c), into the pixel (1,b) as a result. This ink then permeates more deeply through the ink dots formed within the second image. For example, ink that has penetrated from (1,b) reaches (3,c), and ink that has penetrated from (1,e) reaches (4,f), and thus in both cases, the ink flows a distance greater than two pixels. Because the transmission channels of the ink are limited, concentrated ink bleeds occur across a narrower yet deeper range than as illustrated in Fig. 4.

Particularly problematic with the occurrence of ink bleeds is a situation where ink flows from an area having a low ink brightness into an area having a high ink brightness. This is because images having a low brightness formed against a background having a high brightness are extremely apparent, whereas the converse is not.

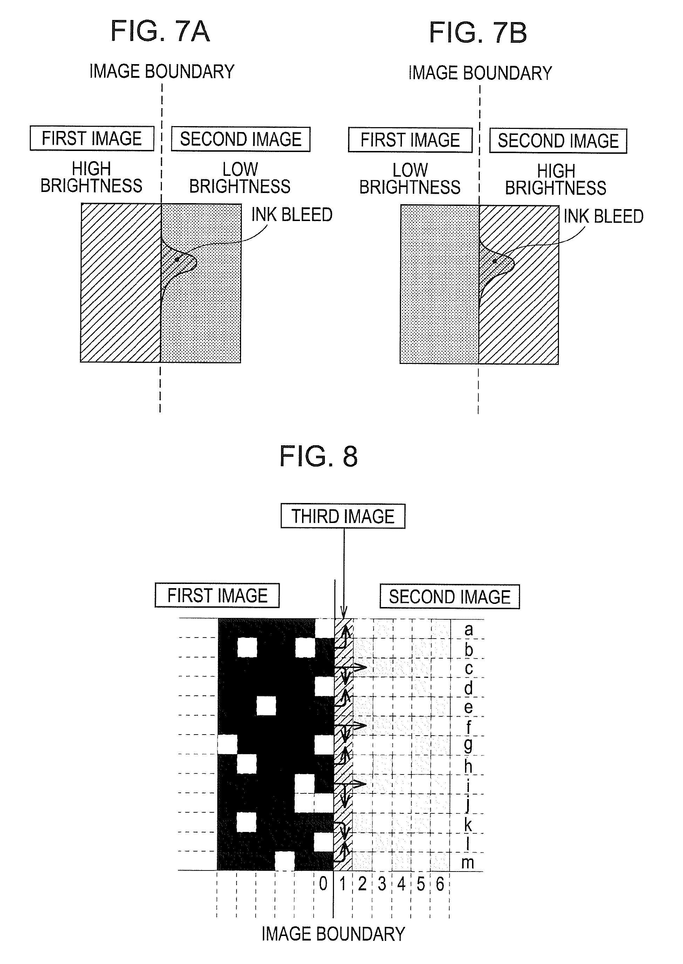

For example, Fig. 7A illustrates a case in which ink has flowed from a first image formed of ink having a high brightness (for example, yellow) into a second image formed of ink having a low brightness (for example, black). In this case, the effect of the black in the second image, which serves as the background, is great, and thus the yellow flowing from the first image is not very apparent. On the other hand, in the case where ink flows from a first image formed of an ink having a low brightness (for example, black) into a second image formed of an ink having a high brightness (for example, yellow), as shown in Fig. 7B, the black flowing from the first image is clearly recognizable, and thus the ink bleed leads to a degradation in the quality of the image.

### Method for Preventing Bleed Occurring at Boundary between Two Images

### Third Image

In this embodiment, ink ejected at the boundary area between two images is ejected at an ejection amount that is greater than or equal to the ink ejection amount per unit pixel in the second image, thus forming a line-shaped region along the borderline, in order to prevent ink from bleeding at the boundary area between the two images. Hereinafter, the region formed by ejecting this ink will be referred to as a "third image".

Ink overflowing at the edge of the first image first flows into the third image formed adjacent thereto. Normally, the ink will continue to flow past the third image and into the second image, and thus ink bleed can be expected to eventually occur. However, in this embodiment, almost all of the ink flowing from the first image remains within the region of the third image, and only a very small amount reaches the second image.

Fig. 8 illustrates an example of the state of ink flow in the case where the third image is formed. In Fig. 8, the third image is formed in a continuous line-shaped region in the pixels (1,a) to (1,m) located at the boundary area between the first image and the second image, and is composed of a total of 13 pixels. Of these, there are eight pixels that make contact with the first image at the boundary area, or (1,b), (1,c), (1,e), (1,f), (1,h), (1,i), (1,k), and (1,m). Therefore, in the example shown in Fig. 8, the ink amount of the 16 pixels overflowing from the first image flows into the region of the third image from the aforementioned eight locations, and disperses throughout 13 pixels. There is then the possibility of the ink amount of the remaining three pixels passing through the third image and flowing into the second image. In other words, because the third image is formed as a line shape having a continuous form, the ink amount of the 16 pixels overflowing from the first image spreads thinly out within the region of the third image, and is thus impeded from reaching the second image.

Note that the aforementioned post-color conversion processing image data can be used to determined the ink ejection amount per unit pixel in the third image. This data is 8-bit data expressing 256 tones for each pixel. Accordingly, tone values are calculated for each unit pixel in the region in which the second image, and the tone values for each unit pixel in the region in which the third image is formed are set to values that are greater than or equal to the calculated tone values. Doing so makes it possible to form the third image using an ink ejection amount that is greater than or equal to the ink ejection amount for each unit pixel in the second image.

In this embodiment, the third image is always formed of yellow ink having a tone value of 255, as will be described later, and thus the ink ejection amount per unit pixel is consistently greater than or equal to the ink ejection amount per unit pixel in the second image. Formation Location of Third Image

It is necessary to form the third image at the boundary area between the first image and the second image, in the pixels that are in the second image (that is, the pixels (1,a) to (1,m) shown in Fig. 8). This is in order to catch the ink flowing from the first image in the third image to the greatest extent possible.

Assume instead that the third image is formed at the boundary area, in the pixels that are in the first image (that is, the pixels (0,a) to (0,m) shown in Fig. 8). The ink ejection amount per unit pixel is already greater in the first image than in the second image, and thus if the added ink of the third image is ejected into the first image, excessive ink overflow will occur at the boundary area, which has the opposite effect of making ink flow into the second image even more likely and increasing the risk of bleeding. Accordingly, it is favorable for the third image to be formed in a single-pixel line in the second image, at the boundary between the first image and the second image, as shown in Fig. 8.

Meanwhile, the region in which the third image is formed may have a width of two or more pixels from the boundary area, rather than a single pixel; in this case, the region for dispersing the ink flowing from the first image is broader, which can be expected to increase the effect of preventing ink from bleeding into the second image. However, if the third image is formed with a width of two pixels at the boundary area between the two images, the edge lines of the images will be enhanced depending on the color, type, and so on of the ink. The change in the boundary area will become overly apparent as a result, thus leading to the risk that the image quality will degrade instead. Accordingly, the third image should normally be formed at a width of one pixel, adjacent to the boundary. A method for detecting the boundary position in order to form the third image (an image processing method) will be described later.

### Ink for Forming Third Image

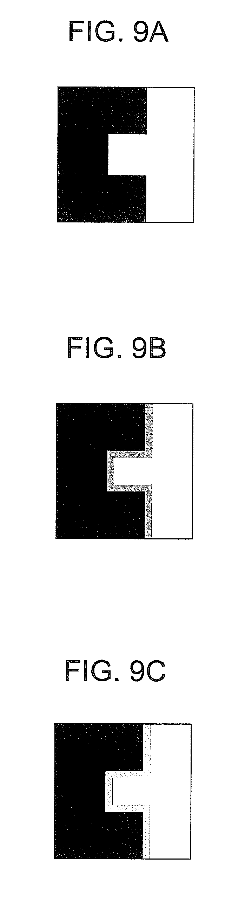

It is preferable for the ink used for forming the third image to have as high as brightness as possible. This is because the third image is, as described earlier, formed in the second image, whose brightness is high; thus if the brightness of the third image is low, the edge of the second image will be enhanced, and the change in the boundary area will become more readily apparent. For example, an image such as that shown in Figs. 9A to 9C, composed of two types of images, is conceivable. Fig. 9A illustrates an image in which the first image, on the left side, is formed of a black image, whereas the second image on the right side therein is formed of a white image; Fig. 9B illustrates an image in which a cyan (colored) third image is formed at the boundary area of the two images; and Fig. 9C illustrates an image in which a yellow (colored) third image is formed at the boundary area of the two images.

As shown in Fig. 9B, it can be seen at a glance that when the third image is formed using cyan, which has a low brightness, the boundary area, and particularly the protruding portion of the second image, has changed shape and is smaller compared to Fig. 9A. However, as shown in Fig. 9C, the change in the boundary area is less apparent when the third image is formed using yellow, whose brightness is high, compared to the state illustrated in Fig. 9B. Therefore, an ink having a higher brightness should be selected as the ink of which the third image is formed, and it is even more effective if that ink has a brightness that is greater than or equal to the ink of which the second image is formed.

In this embodiment, when four-color CMYK ink is used as the ink for printing images, the Y (yellow) ink, which has the highest brightness, should be used as the ink of which the third image is formed, and the following descriptions of the image processing will be given assuming that the third image is formed using yellow ink.

Furthermore, in the case where there is no limitation on the colors of the inks used, white ink or the like having an even higher brightness than yellow may be used. The third image can also be formed using a transparent ink. When transparent ink is used, absolutely no change can be seen at the boundary area, and thus it is also possible to form the region so as to have a width of two pixels, as mentioned earlier. However, when using white ink or transparent ink, it is necessary to add or change a procedure for processing that color (ink) separately during the image processing, which will be described later.

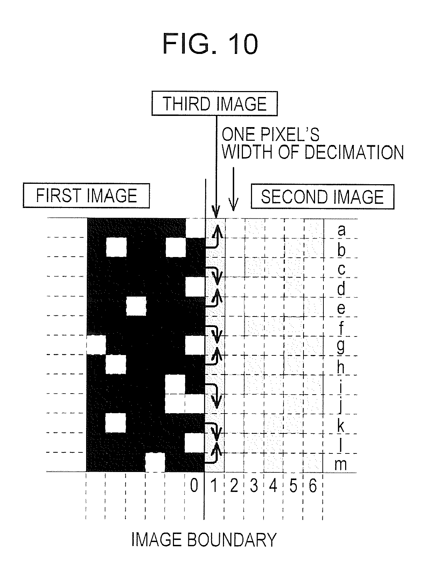

Furthermore, in this embodiment, yellow-component pixels in the second image that are adjacent to the third image are decimated. Accordingly, in the case where the second image is formed using yellow, contact between the ink within the third image region and the ink within the second image region can be completely interrupted, as shown in Fig. 10. No such ink contact results in no ink overflow caused by the effects of surface tension, and thus even the slight amount of ink that has flowed from the third image into the second image in Fig. 8 can be completely interrupted. It is preferable to take one column's width of pixels as the target for decimation in order to reduce the apparentness of changes in the shape of the image boundary area.

Meanwhile, in the case where the second image is formed of a color that has a lower brightness than yellow (for example, cyan), and one column's width of pixels is continuously decimated as described earlier, the decimated areas will become readily apparent and the image quality will conversely degrade as a result. Accordingly, this decimation process should only be carried out on yellow components, for which changes in the boundary area are less apparent.

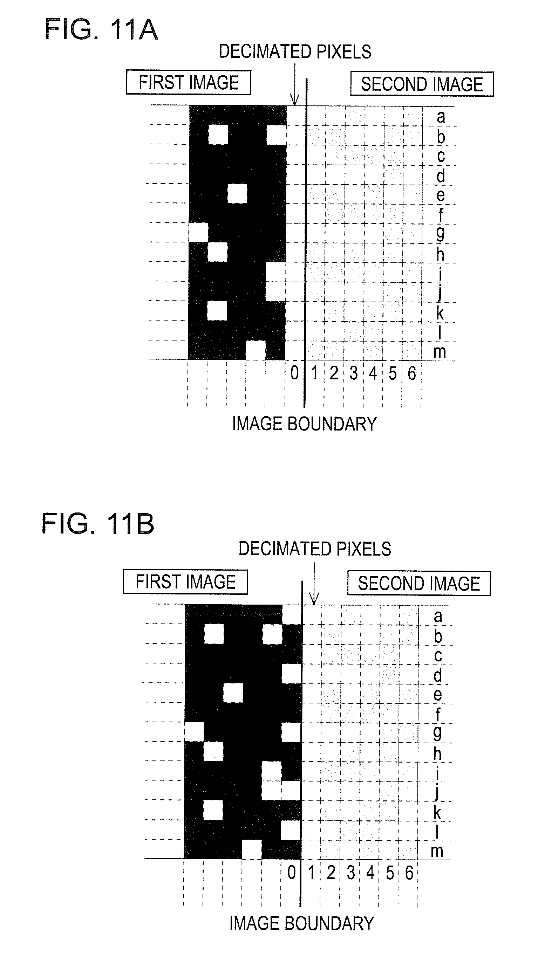

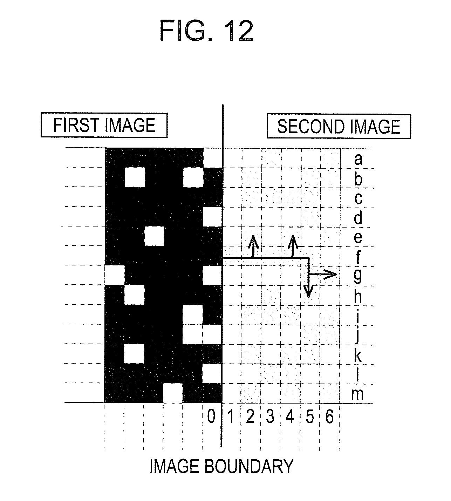

Note that directly decimating one column's width of pixels that corresponds to the borderline between the two images is conceivable as a method for completely interrupting ink bleed. That is, instead of forming the third image at the boundary area of the images, the pixels at the boundary area of the image are directly decimated. Figs. 11A and 11B illustrate, as an example for reference, examples of images in a state in which one column's width of pixels are decimated at the boundary area of the images. Fig. 11A is a diagram illustrating a state in which one column's width of pixels in the first image that are adjacent to the boundary area (0,a to 0,m) are decimated, whereas Fig. 11B is a diagram illustrating a state in which one column's width of pixels in the second image that are adjacent to the boundary area (1,a to 1,m) are decimated. This method also makes it possible to completely interrupt the flow of ink between the first image and the second image, and can thus be thought of as being capable of preventing bleeds with certainty. However, if during the printing process the impact location of the dots are shifted by even a single pixel and ink dots make contact with each other between adjacent images as a result, such as where the first image and the second image make contact with each other due to a dot being formed in a pixel (1,f) in Fig. 12, there is a risk of a large amount of ink flowing into the second image through that point of contact and spreading throughout a region of the second image. The image quality will degrade dramatically if this kind of ink flow occurs, and it is thus difficult to achieve the effect of preventing bleeds.

On the other hand, the third image is formed in this embodiment, and thus even if the impact locations of the ink dots are shifted and dots are formed in the pixels that are to be decimated, the large amount of ink flow into a region of the second image described above will not occur, and it is thus possible to keep ink bleeds to a minimum. Timing of Formation of Third Image

Ink dots that have impacted upon the medium hold a spherical form upon the initial impact, but then gradually collapse and spread out into a disk shape. At the boundary area between images, ink dots that have spread out make contact with each other, eventually mixing together as a result of the contact, as shown in Fig. 5C. In other words, after a certain amount of time has passed following the formation of the first image and the second image, ink dots will make contact with each other at the boundary area between the two images, and the likelihood of ink bleeds occurring increases significantly. Accordingly, the third image should be formed before the first image and the second image are formed or immediately after the first image and the second image are formed. Because ink bleeds between the two images occur particularly at the instant when ink dots make contact with each other, it is preferable for the third image to be formed at the very beginning of the printing process.

### Image Processing Method

An image edge processing method for carrying out printing while also forming the third image will be described hereinafter. This processing is carried out by the printer driver between the aforementioned color conversion processing and halftone processing. Hereinafter, an image processing method in which printing is carried out using four-color CMYK ink and the third image is formed using yellow will be described.

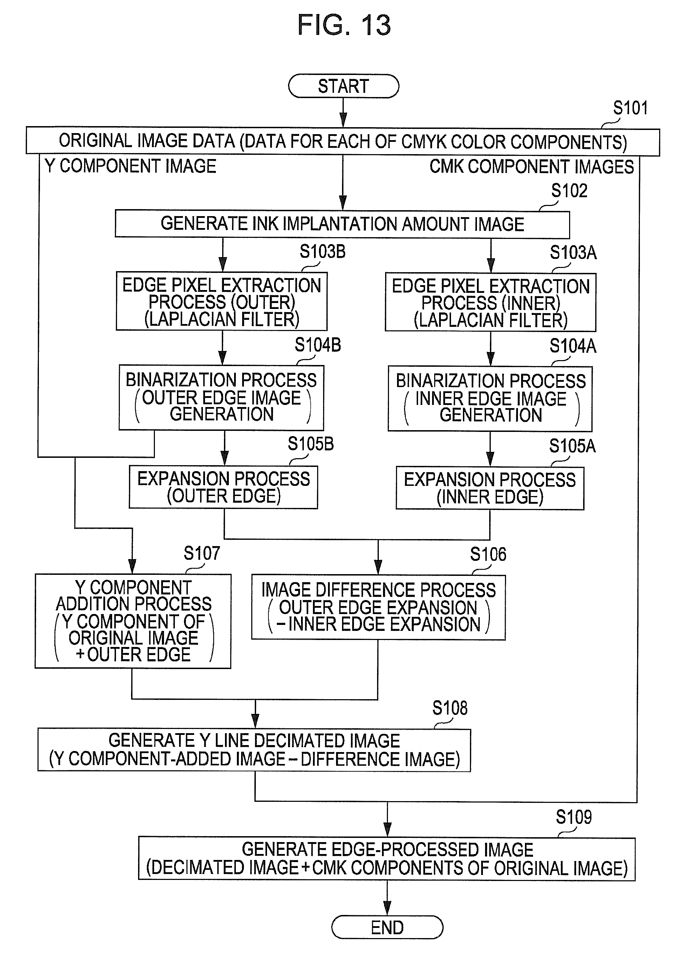

Fig. 13 is a flowchart illustrating the image edge processing according to this embodiment. In this processing, by performing steps S101 to S109, the third image is formed of yellow ink in the pixels of the second image at the boundary area between the first image and the second image (outside of the edge), and furthermore, image data in which the yellow component in one column's width of pixels adjacent to the third image is decimated is generated. Each of these steps will be described hereinafter.

### S101 and S102

Grayscale image data composing a total of four images, or one each for the four CMYK colors, obtained by performing the color conversion processing on the image data, are taken as base images (S101). Here, each pixel is capable of taking on a 256-tone value, from 0 to 255, where a tone value of 0 indicates that ink is not to be applied and the pixel is to remain white, and a tone value of 255 indicates that ink is to be applied so as to form an ink dot of the maximum diameter in the pixel.

The four base images are added together, thus forming image data ImgO expressing an overall ink application amount (S102).

### S103: Edge Pixel Extraction Process

Two types of Laplacian filters having different polarity figures are applied to the ink application amount image ImgO; this extracts the pixels in the first image at the boundary area between the first image and the second image (also referred to as the pixels "inside" the edge hereinafter) (S103A) and the pixels in the second image at the boundary area between the first image and the second image (also referred to as the pixels "outside" the edge hereinafter) (S103B).

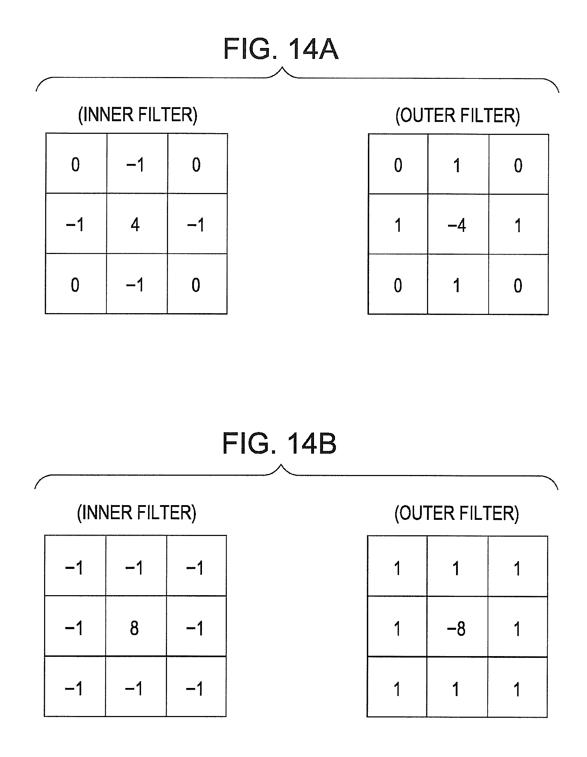

Figs. 14A and 14B illustrate examples of Laplacian filters (inner and outer). Fig. 14A is a Laplacian filter used in this embodiment. This Laplacian filter is composed of a 3 x 3 matrix, and is a four-neighbor secondary differentiation filter that extracts pixels that form the edge of an image by taking a certain input pixel (i,j) and calculating pixels (i,j-1), (i,j+1), (i-1,j), and (i+1,j) on the top, bottom, left, and right thereof. The inner filter and outer filter are in a relationship in which the matrix coefficients are in a relationship in which the polarities thereof are reversed, and each is capable of extracting inside an edge and outside an edge. Clipping is carried out so that the tone values of the pixels following the application of the Laplacian filter fall within a range from 0 to 255. In other words, a negative tone value is processed as 0, or in other words, as a blank pixel, whereas a tone value of 256 or greater is processed as 255, or in other words, as a state in which at dot is formed at 100%.

Note that an eight-neighbor Laplacian filter, such as that shown in Fig. 14B, may be employed as well. In this case, the calculations are carried out using the central pixel (i,j) and the eight pixels in the periphery thereof. Furthermore, the filter used does not necessarily have to be a Laplacian filter, and a Sobel filter or the like may be employed as well, as long as that filter is capable of extracting edges.

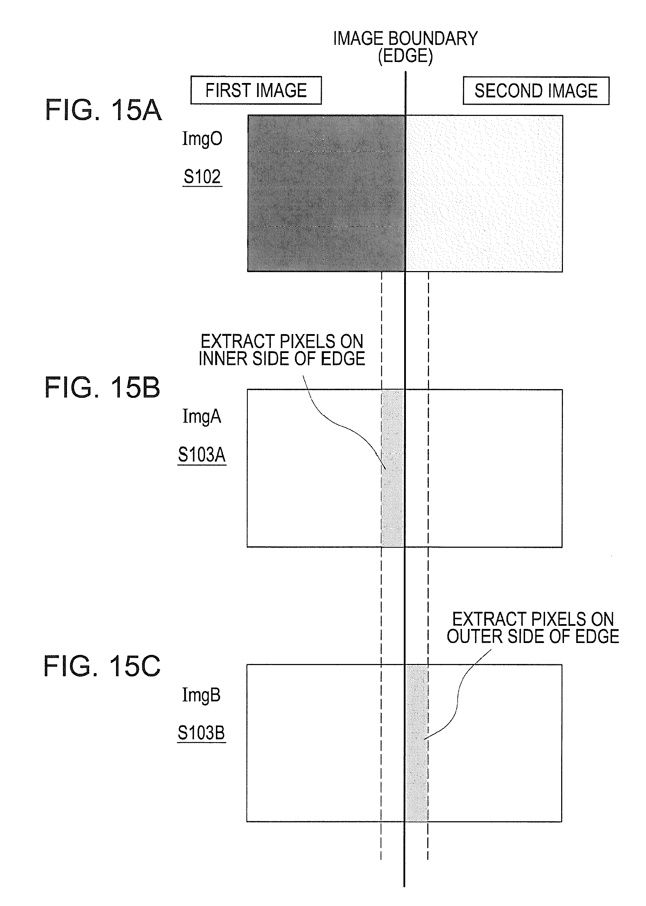

Figs. 15A to 15C illustrate an example of images whose edges are extracted using the extraction processing (S103A and S103B) for edges (inner and outer). Fig. 15A illustrates the ink application amount image ImgO serving as the basis; Fig. 15B illustrates an image ImgA in which the inside edge is extracted using the inner filter; and Fig. 15C illustrates an image ImgB in which the outside edge is extracted using the outer filter.

In the inner edge pixel extraction process (S103A), pixels in the first image (in the inner edge in the first image) are extracted from the boundary area between the first image in which the ink ejection amount per unit pixel is high and the second image in which the ink ejection amount per unit pixel is lower than that of the first image. The extracted inner edge pixels include, as information, the tone values calculated using the inner filter, the information being calculated as half-tone values between the tone values in the first image and the tone values in the second image. Similarly, in the outer edge pixel extraction process (S103B), the pixels in the second image at the boundary area between the first image and the second image (the pixels outside the edge of the first image) are extracted, and the tone values of the pixels outside the edge are calculated as half-tone values between the tone values in the first image and the tone values in the second image.

### S104: Binarization Process

The edge images (inner and outer) extracted in S103 are then binarized based on a predetermined threshold. In other words, the tone values of pixels having tone values greater than or equal to a certain value are set to 255, whereas the tone values of pixels having tone values less than that value are set to 0.

As a result of the binarization process, the image ImgA expressing the pixels on the inside of the edge area extracted as half-tone tone values between the first image and the second image in S103A becomes an image ImgA', in which only the pixels on the inside of the edge area have tone values of 255 and all other non-edge area pixels have tone values of 0 (that is, are white) (S104A). Likewise, the image ImgB in which the pixels on the outside of the edge area are extracted in S103B becomes an image ImgB' in which only the pixels on the outside of the edge area have tone values of 255 (S104B).

### S105: Expansion Process

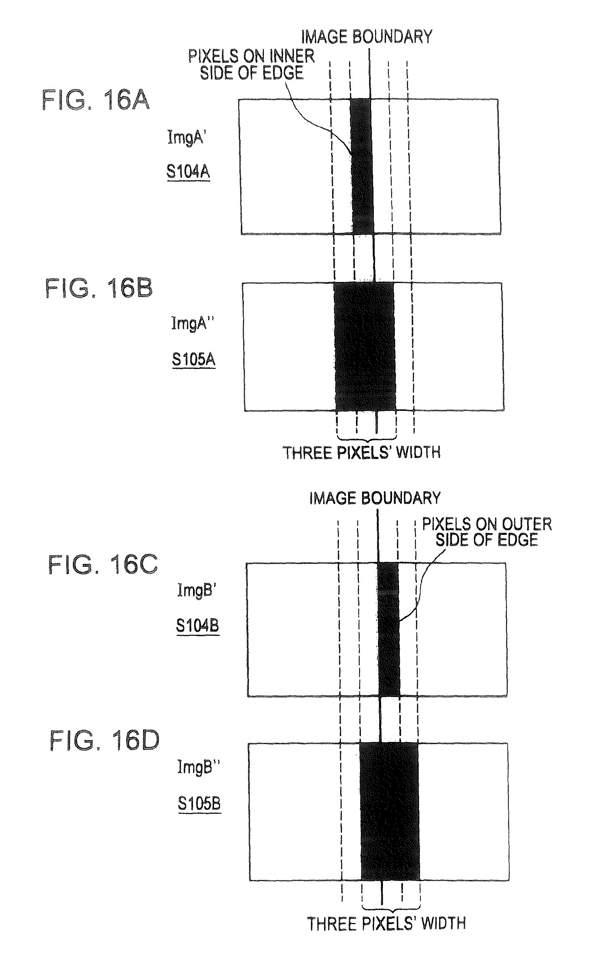

In this embodiment, the ink bleed prevention effects are increased by decimating the yellow component in the pixels in the column which is next to the pixel column adjacent to the outside of the edge, as shown in Fig. 10. In order to specify the pixels to be decimated, first, the pixels of which the inner edge image ImgA' and the outer edge image ImgB' obtained through S104 are expanded in the direction of the pixels that are adjacent thereto (S105A and S105B). Here, "expansion" refers to a process whereby if there is even a single pixel, among pixels that are adjacent to a certain pixel, in which a tone value expressing a higher darkness is assigned, the certain pixel itself is also set to the tone value expressing the higher darkness. Figs. 16A through 16D illustrate examples of images in which inner and outer edge pixels are expanded through the expansion process (S105A and S105B). Fig. 16A illustrates the image ImgA' inside the edge following the binarization process (S104A), whereas Fig. 16B illustrates an image ImgA" in which the pixels inside the edge are expanded through the expansion process (S105A). Likewise, Fig. 16C illustrates the image ImgB' outside the edge following the binarization process (S104B), whereas Fig. 16D illustrates an image ImgB" in which the pixels outside the edge are expanded through the expansion process (S105B).

In this embodiment, ImgA' and ImgB', which express the inner and outer edge images, are converted to edge images having tone values of 255 through the binarization process in S104. Accordingly, as shown in Figs. 16B and 16D, the columns one pixel on both sides of the inner and outer edge pixels also take on tone values of 255 as a result of the expansion process. In other words, the image ImgA" having a width of three pixels central to the pixels inside the edge and the image ImgB" having a width of three pixels central to the pixels outside the edge are obtained.

### S106: Image Differencing Process

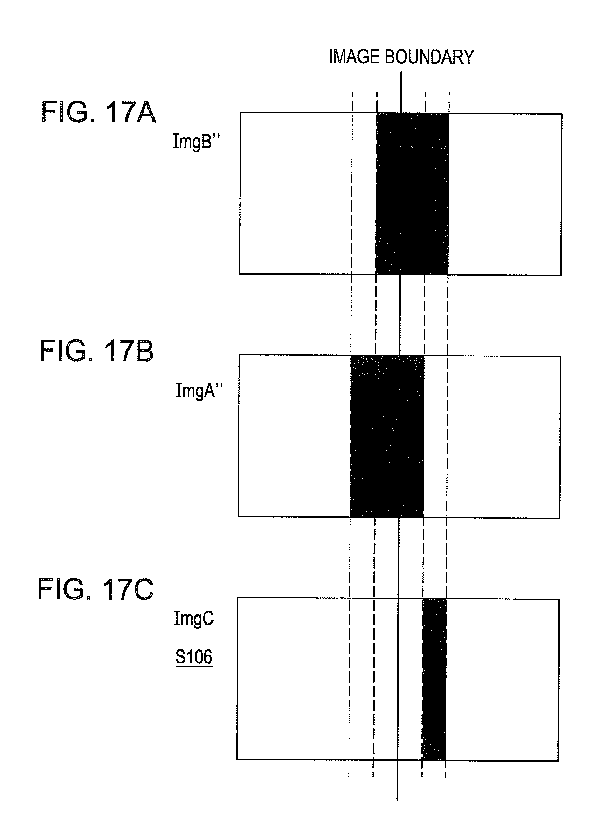

A difference image ImgC between the image ImgB" on the outside edge obtained in S105B and the image ImgA" on the inside edge obtained in S105A is then generated in order to specify the pixels in the base images on which decimation is to be carried out (S106). Figs. 17A through 17C illustrate and example of an image obtained through the image differencing process (S106). Fig. 17A illustrates the ImgB" on the outside edge following the expansion process (S105B), whereas Fig. 17B illustrates the image ImgA" on the inside edge following the expansion process (S105A). Fig. 17C, meanwhile, illustrates the image ImgC representing the different between the ImgB" and the ImgA".

The tone values of the ImgA" may be subtracted from the tone values of the ImgB" in order to generate the ImgC, but if a tone value is negative, that tone value is set to zero through clipping in the same manner as that described earlier. Accordingly, the ImgC is an image in which only pixels one column's width outside from the pixels adjacent to the outside edge (in the second image) have tone values of 255, as shown in Fig. 17C. These pixels are the pixels that are to be decimated.

### S107: Yellow Component Addition Process

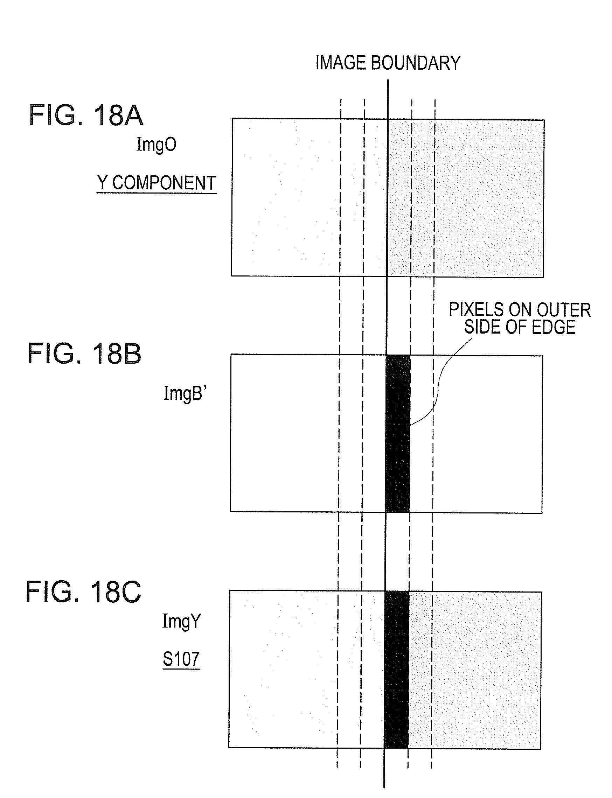

Next, in order to form the third image using yellow ink, an image ImgY, in which one column's width of pixels adjacent to the outside of the edge are expressed as a yellow line, is generated. Figs. 18A through 18C illustrate and example of an image obtained through the yellow component addition process (S107). Fig. 18A illustrates an image in which only the yellow component is extracted from the base image; Fig. 18B illustrates the image ImgB' indicating the pixels outside of the edge obtained through the binarization process (S104B); and Fig. 18C illustrates the yellow component image ImgY in which those two images are added together.

In this process, the yellow component of the base image is added to the image ImgB' in which one column's width of pixels adjacent to the outside of the edge area have taken on tone values of 255 as a result of the binarization, and the yellow component image (ImgY), in which the tone values of one column's width of pixels adjacent to the outside of the edge area are 255, is obtained (S107).

### S108: Yellow Line Decimated Image Generation

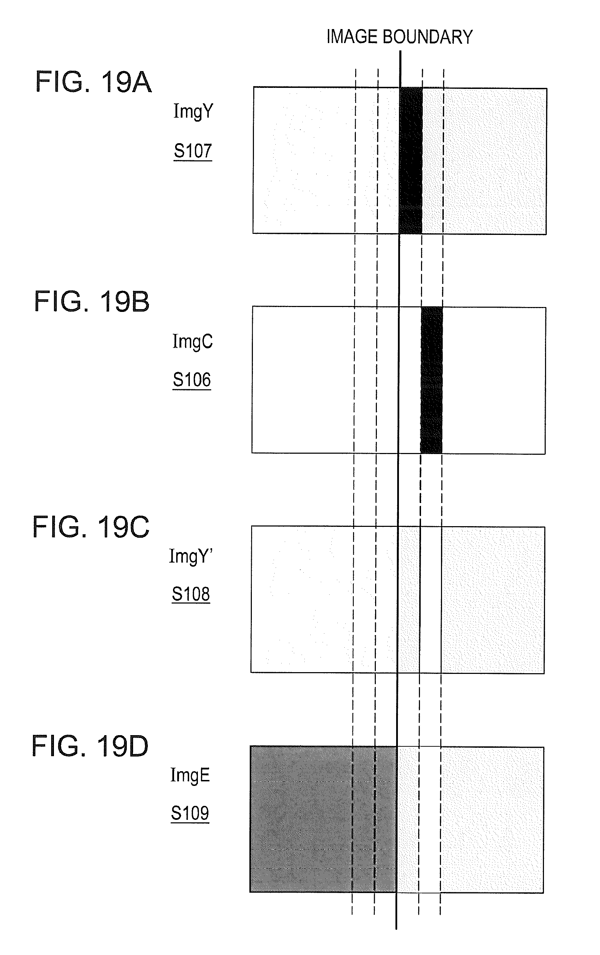

Figs. 19A to 19D illustrate an example of an image in which the yellow component in one column's width of pixels adjacent to the outside of the edge is decimated (S108) and the edge processing is ultimately completed (S109). Fig. 19A illustrates the image ImgY following the yellow component addition process (S107); Fig. 19B illustrates the image ImgC following the image differencing process (S106) and that is to be decimated; Fig. 19C illustrates an image ImgY' in which the ImgC is subtracted from the ImgY; and Fig. 19D illustrates an image ImgE in which the CMK components of the base image are added to the ImgY'.

First, the yellow line decimation process (S108) is carried out, and the image ImgC that is to be decimated is subtracted from the yellow component image ImgY generated in S107; as a result, the third image is formed using yellow ink on the outside of the edge, and the image ImgY' is generated in a state in which the yellow component is decimated in one column's width of pixels adjacent thereto. Accordingly, the yellow component image ImgY', in which the tone values of the pixels formed outside of the edge are 255 and the tone values in one column's width of pixels adjacent to the pixels outside of the edge are 0, is obtained, as shown in Fig. 19C.

### S109: End of Edge Processing

Finally, the components in the base image aside from yellow (that is, the KCM components) are added to the ImgY', and the image ImgE, in which edge processing (the processing in which the third image is formed using yellow ink in the region corresponding to one column's width of pixels on the outside of the edge, and the yellow component in one column's width of pixels adjacent to and outside of the third image is decimated) is performed on the base image, is obtained (5109).

The image data on which the edge processing is completed then undergoes the halftone processing. In the image data that has undergone the edge processing, the third image, composed of a yellow component having tone values of 255, is formed in one column's width of pixels in the second image at the boundary area between the first image and the second image, and furthermore, the yellow component in one column's width of pixels adjacent to and outside of the third image is decimated. Carrying out the halftone processing is expected to result in yellow ink dots being applied at a high density in the region of the third image. Through this, ink overflowing from the first image is dispersed in the region of the third image, making it possible to prevent ink from advancing (bleeding) into the second image.

Furthermore, the yellow component in one column's width of pixels adjacent to the third image is decimated, making it possible to separate the first image and the second image without any apparent changes in the edge; this in turn makes it possible to achieve even greater bleed prevention effects.

Meanwhile, a process for adding the third image separately to the image data after the halftone processing may be carried out. The position in the image data in which the third image is to be formed (that is, the pixels outside of the edge of the first image) has already been specified through the aforementioned processing. Accordingly, a separate process for forming yellow ink dots of the maximum tone value (1 for 1-bit; 4 for 2-bit) in the pixels on the outside of the edge in the post-halftone processing image data is added, and furthermore, a process that decimates the yellow component in those outer pixels is carried out. According to this method, even if, for example, blank pixels in which dots are not formed are present within the region of the third image in the post-halftone processing image data, dots are newly formed in those blank pixels as well, which makes it possible to form the third image with certainty, and in turn makes the bleed prevention effects more certain as well.

### Conclusion

In this embodiment, a third image is formed by printing yellow ink at the maximum tone value (255) in one column's width of pixels in a second image at the boundary area between two adjacent images (a first image and the second image) formed by an ink jet printer.

Through this, ink that overflowing from the first image can be conducted to and dispersed throughout a region of the third image, thus making it possible to prevent ink from overflowing and spreading throughout the second image.

In addition, in this embodiment, the third image is formed in a region that continues along the borderline between the first image and the second image.

Through this, the ink that flows from the first image into the third image can be widely dispersed, which makes it possible to achieve even greater ink bleed prevention effects.

In addition, in this embodiment, the third image is formed using yellow ink, which has the highest brightness among the CMYK colors.

Through this, changes in the boundary area of the image (the image edge) are less apparent.

Furthermore, in this embodiment, one column's width of yellow-component pixels in the second image that are adjacent to the third image are decimated.

Through this, in the case where the second image is formed using yellow, the second image and the third image can be completely separated from each other, making it possible to achieve even greater ink bleed prevention effects.

In addition, in this embodiment, a process for ejecting ink into the region in which the third image is formed in image data that has undergone the halftone processing may be carried out.

Through this, ink dots will always be formed in the region of the third image regardless of what halftoning method is used, which makes it possible to achieve the bleed prevention effects with certainty.

In addition, in this embodiment, the third image can be formed prior to the formation of the first image and the second image.

Through this, ink overflowing from the first image will always flow into the region of the third image before flowing into the second image, which makes it easier to achieve the bleed prevention effects.

### Other Embodiments

While a printer or the like is described as an exemplary embodiment, the aforementioned embodiment is provided so as to illustrate the invention, and should not be taken as limiting the invention in any way. It goes without saying that many variations and modifications can be made without departing from the essential spirit of the invention, and thus all such variations and modifications also fall within the scope of the invention. In particular, the embodiments described hereinafter also fall within the scope of the invention.

### Printing Apparatus

Although an ink jet printer was described as an example of a printing apparatus that forms an image in the aforementioned embodiment, the invention is not limited thereto. The same techniques as those described in the aforementioned embodiment may be applied to various types of liquid ejecting apparatuses that employ ink jet techniques, such as color filter manufacturing apparatuses, dyeing apparatuses, microfabrication apparatuses, semiconductor manufacturing apparatuses, surfacing apparatuses, three-dimensional molding machines, liquid vaporizing apparatuses, organic EL manufacturing apparatuses (and in particular, high-polymer EL manufacturing apparatuses), display manufacturing apparatuses, deposition apparatuses, DNA chip manufacturing apparatuses, and so on.

### Usable Inks

Although an example in which printing is carried out using four-color CMYK was described in the aforementioned embodiment, the invention is not limited thereto. For example, the printing may be carried out using ink colors aside from CMYK, such as light cyan, light magenta, white, and clear.

### Ink Brightness

Although the influence of brightness differences was described with respect to the ink of which the third image is formed in the aforementioned embodiment, the brightness is not the only element that has such influence. Although in reality, the brightness of the ink has the greatest influence on the visibility, it is preferable to determine the ink of which the third image is to be formed taking into consideration elements that may have influence on the visibility, such as the diameter of the ink dots, color differences between inks, the type, color, and so on of the medium, and so on.

### Piezo Elements

Although the piezo elements PZT were described as an example of elements for carrying out operations for causing liquid to be ejected in the aforementioned embodiment, other types of elements may be employed instead. For example, heat-generating elements, static electricity actuators, or the like may be used.

### Printer Driver

The processing of the printer driver may be carried out by the printer. In such a case, the printing apparatus is configured of the printer and a PC on which the driver is installed.

### Other Apparatuses

Although the printer 1, which is of a type in which the head 41 moves along with the carriage, was described as an example in the aforementioned embodiment, a so-called line printer, in which the head is anchored in the printer, may be employed as well.

## Claims

1. A printing apparatus (1) comprising:
a head unit (40) configured to eject ink; and
a control unit (60) configured to cause the head unit (40) to eject ink,
wherein when a first image and a second image that is adjacent to the first image are formed, the control unit (60) is configured to form a third image by causing ink to be ejected, in pixels within the second image at the boundary area between the first image and the second image, at an ejection amount that is greater than the amount of ink per unit pixel ejected in order to form the second image.

2. The printing apparatus (1) according to claim 1,
wherein the control unit (60) is configured to form the third image in a continuous region.

3. The printing apparatus (1) according to claim 1 or 2,
wherein the control unit (60) is configured to form the second image of a second ink and the third image of a third ink, the brightness of the third ink is greater than or equal to the brightness of the second ink.

4. The printing apparatus (1) according to claim 1,
wherein when the second image is formed using yellow ink, the control unit (60) is configured to decimate the yellow component of pixels in the second image that is adjacent to the third image.

5. The printing apparatus (1) according to any of claims 1 to 4,
wherein the control unit (60) is configured to separately cause ink to be ejected into the pixels on which the third image is formed after a halftone process has been performed on image data.

6. The printing apparatus (1) according to any of claims 1 to 5,
wherein the control unit (60) is configured to form the third image before forming the first image and the second image.

7. A printing method comprising:
forming a first image by causing ink to be ejected from a head unit (40);
forming a second image that is different from the first image adjacent to the first image by causing ink to be ejected from the head unit (40); and
forming a third image by causing ink to be ejected, in pixels within the second image at the boundary area between the first image and the second image, at an ejection amount that is greater than the amount of ink per unit pixel ejected in order to form the second image.

8. A printing method according to claim 7, wherein:
the second image is formed of a second ink and the third image is formed of a third ink,
the brightness of the third ink is adjusted to be greater than or equal to the brightness of the second ink.
